# EUROPÄISCHE PATENTSCHRIFT

(11) **EP 3 148 681 B1**
(45) Veröffentlichungstag und Bekanntmachung des Hinweises auf die Patenterteilung: **04.04.2018**
(21) Anmeldenummer: 15723887.4
(22) Anmeldetag: 12.05.2015
(51) Int. Cl.: B01D 69/08, B01D 61/14, B01D 69/12, B01D 71/02

(54) **KERAMISCHE MEHRSCHICHTIGE HOHLFASERMEMBRAN**
CERAMIC MULTILAYER HOLLOW FIBER MEMBRANE
MEMBRANE MULTICOUCHE EN CÉRAMIQUE SOUS FORME D'UNE FIBRE CREUSE

(30) Priorität: 27.05.2014 DE 102014007665
(43) Veröffentlichungstag der Anmeldung: 05.04.2017
(73) Patentinhaber: Mann+Hummel GmbH, 71636 Ludwigsburg (DE)
(72) Erfinder: EHLEN, Frank, 66540 Neunkirchen (DE)
(74) Vertreter: Seyboth, Matthias
(86) Internationale Anmeldenummer: PCT/EP2015/060422
(87) Internationale Veröffentlichungsnummer: WO 2015/180954

(56) Entgegenhaltungen:
- WO-A1-2008/016292
- WO-A1-2010/028330
- DE-A1- 19 618 920
- KR-A- 20090 017 000
- US-A- 4 446 024

## Beschreibung

Die vorliegende Erfindung betrifft eine Filtermembran nach dem Oberbegriff des Anspruchs 1, sowie eine Hohlfaser und ein Filtermodul.

Die US 2010112267 AA offenbart eine einschichtige Hohlfasermembran zur Filterung von Gasen. Diese Hohlfasermembran besteht aus porösem Material.

Die DE 102005008900 A1 offenbart ein Filtermodul mit einer Vielzahl von Hohlfasern. Diese Hohlfasern bestehen aus keramischem Material. Die Hohlfasermembran kann mehrschichtig aufgebaut sein, insbesondere aus mehreren Vergussmassen.

Die DE 10112863 C1 offenbart ein Filtermodul aus keramischen Al₂O₃-Grünfasern.

Es sind zudem mehrschichtige keramische Hohlfasern bekannt, die aus oxidkeramischen Materialien, z.B. aus Al₂O₃, gebildet sind. Diese Fasern setzen sich allerdings nach und nach zu, so dass der Diffusionsfluss beeinträchtigt ist.

Es sind ferner Hohlfasern bekannt, welche aus nichtoxidkeramischem Material gebildet sind. Diese müssen allerdings sehr kostspielig herstellbar. Sie werden im Fall von Siliziumcarbid-Hohlfasermembranen bei Brenntemperaturen von mehr als 2000°C unter Sauerstoffabschluss hergestellt.

Es ist somit die Aufgabe der vorliegenden Erfindung, eine Filtermembran ausgebildet als Hohlfaser bereitzustellen, die kostengünstig herstellbar sind und einer gegenüber oxidkeramischen Hohlfaser bessere Filtereigenschaften aufweist.

Diese Aufgabe wird durch eine Filtermembran mit den Merkmalen des Anspruchs 1 gelöst.

Eine Filtermembran zur Filterung eines Mediums (10) ist mehrschichtig aufgebaut. Sie weist zumindest eine erste Schicht auf. Hauptbestandteil dieser ersten Schicht ist ein oxidkeramisches Material. Die Filtermembran weist zudem zumindest eine zweite Schicht auf, welche als Hauptbestandteil ein nichtoxidkeramisches Material aufweist.

Die Filtermembran kann einfach und kostengünstig herstellen und weist hervorragende Filtereigenschaften auf.

Vorteilhafte Eigenschaften sind Gegenstand der Unteransprüche.

Vorzugsweise werden über 60 Gew.% der ersten Schicht aus oxidkeramischem Material gebildet. Ebenso vorzugsweise werden über 60 Gew.% der zweiten Schicht aus einem nichtoxidkeramischen Material gebildet. Allerdings können weitere Materialien zur Verbesserung der Materialeigenschaften je nach Anwendungsbereich in der ersten und/oder in der zweiten Schicht enthalten sein.

Die Filtermembran kann zudem weitere Schichten aufweisen. So kann beispielsweise zwischen der ersten und der zweiten Schicht eine Anbindungsschicht angeordnet sein, welche unterschiedliche Temperaturausdehnungskoeffizienten der ersten und der zweiten Schicht ausgleicht oder zur Anpassung der Porengröße zwischen dem Support und dem Membran. So kann die erste Schicht eine sehr große Porengröße aufweisen, in welche das Material der zweiten Schicht eindringen kann. Dies ist allerdings unerwünscht und kann durch die Zwischenschicht verhindert werden

Produktionstechnisch besonders vorteilhaft kann die Filtermembran allerdings auch nur aus den besagten zwei Schichten aufgebaut sein.

Die erste Schicht der Filtermembran ist als eine Trägerschicht ausgebildet. Sie schafft eine mechanische Festigkeit der Filtermembran, insbesondere der Hohlfaser. Die zweite Schicht ist als eine Trennschicht zur Filtration des Mediums unter Ausbildung eines Retentats und eines Permeats ausgebildet. Die zweite Schicht kann dabei unmittelbar auf der ersten Schicht angeordnet sein.

Die erste Schicht kann vorteilhaft weitere Zuschlagstoffe aufweisen, zur Verbesserung der Materialeigenschaften dieser Schicht. Diese kann je nach Anwendungsbereich variieren. Bei der Filterung warmer Medien kann es zwischen den Schichten zu unterschiedlicher Materialausdehnung kommen. Die Zuschlagstoffe können eine Anpassung des Temperaturausdehnungskoeffizienten an die zweite Schicht ermöglichen. Alternativ oder zusätzlich können sie auch die mechanische Festigkeit der ersten Schicht verbessern. Vorzugsweise sind diese Zuschlagstoffe bis zu 20 Gew.% im Material der ersten Schicht enthalten. Bei den Zuschlagstoffen kann es sich um oxidkeramische SiO₂-Partikel beliebiger Größe oder um nanoskalige oxidkeramische Partikel, insbesondere in der Größenordnung kleiner 100 nm, handeln.

Die erste Schicht kann zu mindestens 75 Gew.% aus einem oxidkeramischen Material bestehen.

Das oxidkeramische Material ist aus folgenden Stoffen ausgesucht: Al₂O₃, ZrO₂, TiO₂, Y₂O₃ und/oder SiO₂. Diese Materialien oder Mischungen dieser Materialien weisen eine vorteilhafte Festigkeit auf, so dass die Hohlfaser, eine gute Festigkeit und Druckstabilität hat. Weiterhin kann das oxidkeramische Material Zuschlagstoffe aufweisen, vorzugsweise in Form von alkali- und/oder erdalkalioxidischen Verbindungen.

Die zweite Schicht kann vorzugsweise weitere Zuschlagstoffe aufweisen, um die Materialeigenschaften der zweiten Schicht je nach Anwendungsgebiet zu verbessern. Es kann sich dabei um zusätzliche Hartstoffe zur Verbesserung der mechanischen Festigkeit der zweiten Schicht handeln. Diese Zuschlagstoffe sind vorzugsweise bis zu 20 Gew.% im Material der zweiten Schicht enthalten. Der Zuschlagstoff kann vorzugsweise eine oxidische Keramik, insbesondere ein Zirkon(IV)-oxid oder Böhmit, sein. Böhmit ist eine Mischstruktur aus Oxiden und Hydroxiden des Aluminiums. Derartige oxidkeramische Anteile der zweiten Schicht können auch erst beim Sintern in bzw. an der zuvor ausschließlich nichtoxidkeramischen Schicht entstehen. Dies kann einerseits daran liegen, dass Oxidation am nichtoxidkeramischen Material beim Sintern unter nicht vollständigem Ausschluss von Sauerstoff stattfindet und andererseits daran, dass Oxide aus der ersten Schicht in die zweite Schicht diffundieren. Der Anteil von oxidkeramischen Partikeln in der zweiten Schicht liegt dabei insbesondere im einstelligen Prozentbereich, d.h. bei weniger als 10%, bevorzugt bei kleiner 3 %, besonders bevorzugt kleiner 1% (bezogen auf Gewichtsanteile). Selbstverständlich ist auch eine Diffusion nichtoxidkeramischer Bestandteile aus der zweiten in die erste Schicht denkbar. Die Zuschlagstoffe sowohl der ersten als auch der zweiten Schicht können vorzugsweise sind vorteilhaft als nanoskalige Partikel ausgebildet, insbesondere mit einem mittleren Partikeldurchmesser im Durchschnitt von kleiner als 100 nm, besonders bevorzugt von 5-50 nm. Zuschlagstoffe mit entsprechenden mittleren Partikelgrößen sind kommerziell erhältlich. Eine Partikelgrößenbestimmung kann alternativ mittels Laserlichtstreuung z.B. mit einem Nanopartikelanalysator der Fa. Retsch (Horiba SZ-100) erfolgen. Dies ermöglicht eine Einbindung durch Brennen ohne Sauerstoffabschluss, ohne dass eine Sinterung und Verdichtung der Schichten erfolgt. Typische Sintertemperaturen von über 1000°C werden daher bei der Herstellung dieser Filtermembranen und Hohlfasern vorteilhaft vermieden.

Das nichtoxidkeramische Material ist ein Nitrid- und/oder ein Carbid. Es kann vorzugsweise ausgesucht sein aus folgenden Stoffen: SiC, Si3N4, AIN und/oder BN. Die Nitride und Carbide, insbesondere die vorgenannten Stoffe, sind hervorragend geeignet als Filtermembranmaterial und weisen gute Trenneigenschaften auf.

Für eine kostengünstig herstellbare und langlebige, erfindungsgemäße Membran ist es vorteilhaft, ausschließlich nichtoxidkeramisches Material für die Herstellung der zweiten Schicht zu verwenden, so dass die zweite Schicht nach dem Sintern mit den o.g. Einschränkungen im Wesentlichen und bevorzugt ausschließlich aus nichtoxidkeramischem Material besteht. Dabei ist bevorzugt, dass die zweite Schicht als Trennschicht zur Filtration eines Mediums unter Ausbildung eines Retentats und eines Permeats ausgebildet ist

In gleicher Weise ist es für eine effiziente Herstellung vorteilhaft, wenn für die Herstellung der ersten Schicht ausschließlich oxidkeramisches Material verwendet wird, so dass diese analog im Wesentlichen und bevorzugt ausschließlich aus oxidkeramischem Material besteht. Dabei ist es bevorzugt, dass die erste Schicht als Trägerschicht ausgebildet ist.

Eine erfindungsgemäße Hohlfaser weist eine Faserwandung auf.

Vereinzelt werden im Stand der Technik zwischen Hohlfasern und Kapillarfasern differenziert. Der Begriff Hohlfaser, gemäß der vorliegenden Erfindung, umfasst dabei auch die vorgenannten Kapillarfasern.

Vorzugsweise kann eine erfindungsgemäße Hohlfaser einen Innendurchmesser von 0,2 bis 5,0 mm aufweisen.

Die Faserwandung kann vorzugsweise eine Wandstärke von 0,02 bis 1,5 mm aufweisen.

Es ist von Vorteil, wenn die zweite Schicht ein Verhältnis der durchschnittlichen Schichtdicke zur durchschnittlichen Porengröße kleiner als von 2500:1, vorzugsweise kleiner als 1000:1, insbesondere von 500:1 bis 50:1, aufweist. Quecksilberporosimeter, welche im Bereich auch unterhalb von 10 nm Porengröße messen und daher zur Porengrößenbestimmung geeignet sind, sind von verschiedenen Herstellern, z.B. Quantachrome Instruments und Micromeritics, bekannt.

Die Trennschicht ist vorteilhafterweise kleiner als die Trägerschicht. Das Verhältnis der Wandstärke der Filtermembran zur Wandstärke der zweiten Schicht kann größer sein als 3:1, vorzugsweise größer als 8:1, insbesondere größer als 10:1. Die Schichtdicken und deren Aufbau lassen sich beispielsweise mittels GDOES-Spektroskopie (Glimmentladungsspektroskopie) analysieren. Geringfügige Schwankungsbreiten einzelner Geräte unterschiedlicher Hersteller sind bereits in den Bereichsangaben berücksichtigt.

Bei der zweiten Schicht kann es sich dabei vorzugsweise eine mediumsberührende Schicht handeln, welche den Innenumfang der Hohlfaser ausbildet.

Die Filterung des Mediums durch die Hohlfaser kann vorzugsweise derart erfolgen, dass Medium in den Innenraum bzw. Hohlraum der Hohlfaser zuführbar ist und dass das Permeat nach außen durch die Faserwandung abgeführt wird. Dieses Permeat kann außerhalb des Lumens der Hohlfaser gesammelt und abgeführt werden.

Es ist allerdings auch ein Aufbau einer Hohlfaser mit umgekehrter Filtrationsrichtung im Rahmen der Erfindung realisierbar, sodass das Permeat innerhalb des Lumens der Hohlfaser gesammelt und durch den Hohlraum der Hohlfaser abgeführt wird. Dies ist z.B. möglich, wenn außerhalb der Hohlfaser ein hoher Druck herrscht und/oder wenn innerhalb der Hohlfaser ein Vakuum oder ein Unterdruck angelegt wird. In diesem Fall kann die zweite Schicht, als mediumsberührende Schicht, die äußerste Schicht der Faserwandung der Hohlfaser bilden.

Ein erfindungsgemäßes Filtermodul zur Filterung eines Mediums umfasst eine Mehrzahl an erfindungsgemäßen Hohlfasern. Dieses Filtermodul weist gegenüber einem Filtermodul mit einer oxidkeramischen Trennschicht wesentlich bessere Filtereigenschaften auf. Insbesondere setzt sich die Trennschicht bei mehrstündigem, sogar mehrtägigem, Gebrauch in viel geringerem Maße zu als eine oxidkeramische Trennschicht. So weist das erfindungsgemäße Filtermodul den Vorteil auf, dass es zumindest am ersten Tag eines Langzeitgebrauchs einen höheren Diffusionsfluss aufweist auf als ein Filtermodul mit Hohlfasern mit einer oxidkeramischen Trennschicht.

Die erfindungsgemäße Hohlfasern, insbesondere als Anordnung in einem Filtermodul, können zur Filterung von sogenanntem Produced Water, von Prozesswasser, zur Wasseraufbereitung, zur Oberflächenwasseraufbereitung, zur Abwasserbehandlung und Recycling, für Filtrationsanwendungen in der Lebensmittel- und Getränkeindustrie sowie der chemischen Industrie und der Bio- und Medizintechnik, insbesondere zur Blutfiltration, und in Automobilanwendungen, insbesondere zur Wasser/Öl Trennung verwendet werden.

Produced water ist ein feststehender Begriff der Öl- und Gasindustrie. Er bezeichnet Wasser, welches bei der Öl- und Erdgasgewinnung, so z.B. auch beim Fracking, anfällt. Dieses kann vereinzelt auch höhere Viskositäten aufweisen als normales Wasser. Auch bei Ölgewinnung, z.B. bei Ölbohrungen und bei der Förderung von Erdöl fallen Unmengen an verunreinigtem Wasser an. Dies wird ebenfalls in Fachkreisen als produced water bezeichnet.

Eine bevorzugte Ausführungsvariante der Erfindung wird anhand der nachfolgenden Figuren näher erläutert. Es zeigen:
Fig. 1: eine schematische Darstellung des Trennprinzips einer Hohlfasermembran;
Fig. 2: ein Filtermodul aus mehreren Hohlfasermembranen; und
Fig. 3: Detailansicht einer erfindungsgemäßen Hohlfaser.

Hohlfasern können als teildurchlässige Strukturen ausgebildet sein. Die Faserwandung oder einzelne Schichten der Faserwandung der Hohlfaser können dabei als Filtermembran wirken.

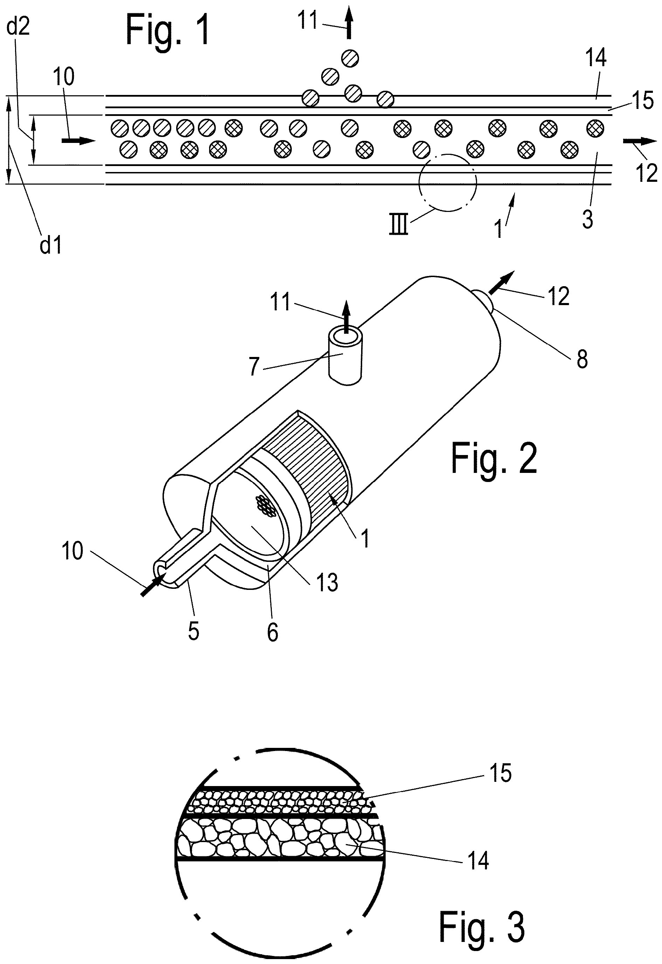

Nachfolgend werden in den Fig. 1 bis 3 ein bevorzugtes Ausführungsbeispiel für Hohlfasern dargestellt. Der Gegenstand der Erfindung ist jedoch nicht auf die Faserwandung von Hohlfasern als Filterelement beschränkt, sondern kann als Filtermembran auch z.B. für Flachfilter oder andere Filterelemente eingesetzt werden. Die Filtermembran oder zumindest die Trägerschicht kann neben der Ausbildung als Hohlfaser oder Flachmembran auch als Multikanalelement oder Wabenkörper ausgebildet sein.

Fig. 1 zeigt eine erfindungsgemäße Hohlfaser 1 zur Filterung eines Mediums. Das zu filternde Medium ist eine Flüssigkeit und kann eine oder mehrere Komponenten umfassen. Die Flüssigkeit ist feststoffbeladen oder eine oder mehrere nicht-mischbare Flüssigkeiten enthalten, welche aus dem Medium durch die Hohlfaser bzw. die Faserwandung abgetrennt werden.

Ein typisches Beispiel eines Mediums, welches eine nicht-mischbare Flüssigkeit enthält, ist ein Wasser/Öl-Gemisch. Das Permeat, z.B. Wasser, durchdringt die Trennschicht. Das Retentat, z.B. das Öl, wird in der Hohlfaser weitergeleitet. Das Retentat tritt endständig aus dem Hohlfaserinnenraum aus.

Diese Hohlfaser 1 weist zumindest eine zylindrische Faserwandung 2 und einen oder mehrere darin befindliche Hohlräume 3 auf. Die Hohlfaser kann auch Kapillarmembran oder Hohlfaden bezeichnet werden. Sie dient der Filterung eines Mediums oder eines Mediumsgemisches. Das zu filternde Medium 10 bzw. Mediumsgemisch kann in die Hohlfaser geleitet werden und das gefilterte Medium, das Permeat 11, kann durch die Wand der Hohlfaser austreten und im Medium befindliche feste oder flüssige Inhaltsstoffe können an der Membraninnenwandung als Retentat 12 zurückgehalten werden.

Die in Fig. 1 dargestellte Hohlfaser 1 weist vorzugsweise einen Innendurchmesser d2 auf, welcher im Durchschnitt mehr als 50% des Außendurchmessers d1, besonders bevorzugt mehr als 70% des Außendurchmessers d1, insbesondere mehr als 85% des Außendurchmessers d1 der Hohlfaser beträgt.

Zur effektiven Filterung beträgt die Wandstärke der Faserwandung 2 der Hohlfaser 1 vorzugsweise zwischen 20-1500 µm, besonders bevorzugt zwischen 100-500 µm.

Entsprechende Filtermodule für den Einsatz als Wasserfilter weisen vorzugsweise eine Vielzahl der vorgenannten Fasern 1 auf, wobei deren durchschnittlicher Außendurchmesser bevorzugt kleiner ist als 5 mm, besonders bevorzugt zwischen 2,5 bis 3,5 mm. Fig. 2 zeigt den schematischen Aufbau eines solchen Filtermoduls 4.

Der Innendurchmesser der Fasern 1 kann besonders bevorzugt für den Einsatz als Wasserfilter, beispielsweise für produced water, zwischen 1,5 bis 2,3 mm, insbesondere zwischen 1,8 bis 2,0 mm.

Das entsprechendes Filtermodul 4 kann zumindest eine Zuleitung 5 für ein zu filterndes Medium 10 aufweisen, sowie einen Innenraum 6, ggf. mit entsprechenden Ableitung 7 für das Permeat 11, und eine Ableitung 8 für das Retentat 12. Der Innenraum des in Fig. 2 dargestellten Beispiels für ein Filtermodul dient einerseits dem Sammeln und Ableiten des Permeats als auch der Bündelung der Hohlfasermembranen. Zum Aufbau von Filtermodulen für den Einsatz bei Wasserfilter können beispielsweise Hohlfasern mit einer Länge von vorzugsweise zwischen 10 und über 100 cm zu Modulen zusammengefasst, und an beiden Enden gegen das Auftreten einer Leckage zwischen Permeat und Retentatseite vergossen werden.

Der Filterweg des filtrierenden Mediums 10 erfolgt vorzugsweise von innen nach außen. Dabei gelangt das Medium 10 beispielsweise über eine erste Stirnseite 13 der Fasern in den rohrförmigen Hohlraum 3 der Hohlfaser 1. Das Permeat 11, also das gereinigte Medium, tritt durch die porösen Faserwandung 2 der Hohlfaser 1 hindurch und kann außerhalb der Fasern gesammelt werden. Üblicherweise erfolgt dies in einem Gehäuseinnenraum des Filtergehäuses, aus dem das Permeat 11 aus einem Filtermodul ausgeleitet wird. Das im Hohlraum 3 verbleibende Medium ist mit den Rückständen angereichert, welche nicht die Faserwandung 2 passiert haben, dem sogenannten Retentat. Diese Zusammensetzung aus Medium und Retentat 12 wird auf der gegenüberliegenden zweiten Stirnseite abgeleitet.

Es können allerdings auch Hohlfasern im Rahmen der vorliegenden Erfindung realisiert werden, die einen Filterweg von außen nach innen aufweisen.

Fig. 3 zeigt eine Detailansicht der Faserwandung 2 der Hohlfaser 1 der Fig. 1.

Die Faserwandung 2 der Hohlfaser 1 besteht bei der erfindungsgemäßen aus zumindest zwei Schichten. Es können aber auch weitere Schichten ergänzt werden. Dies umfasst beispielsweise eine Zwischenschicht, um eine bessere Anbindung der beiden anderen Schichten zu ermöglichen und/oder um eine Anpassung der Porengrößen zu ermöglichen. Diese Zwischenschicht kann besonders bevorzugt aus einem oxid- oder nichtoxidkeramischen Material bestehen.

Die erste Schicht 14 basiert auf einem oxidkeramischen Material. Diese erste Schicht 14 bildet dabei die Trägerschicht. Die oxidkeramischen Anteile sind dabei der Hauptbestandteil, vorzugsweise mehr als 60 Gew.%, des Materials dieser Schicht. Weitere Nebenbestandteile können enthalten sein. Oxidkeramische Materialien für die erste Schicht sind ausgesucht aus folgenden Stoffen: Al₂O₃, ZrO₂, TiO₂, Y₂O₃, SiO₂ oder Mischungen daraus. Besonders bevorzugt ist Al₂O₃. Zusätzlich kann das oxidkeramische Material noch Alkali- und/oder Erdalkalioxide enthalten.

Es ist zudem eine zweite Schicht 15 als Bestandteil der Faserwandung 2 vorgesehen. Diese kann auf der ersten Schicht 14 angeordnet sein. Sie basiert auf einem nichtoxidkeramischen Material. Die nichtoxidkeramischen Anteile sind dabei Hauptbestandteil, vorzugsweise mehr als 60 Gew.%, des Materials dieser Schicht 15.

Es ist auch möglich, dass weitere Anteile, auch oxidkeramischer Natur, als Nebenbestandteile in der zweiten Schicht 15 enthalten sind. Derartige Nebenbestandteile dienen der Verbesserung der Bruchfestigkeit und Verminderung der Sprödigkeit dieser Schicht. Dabei kann es sich z.B. um einen zirkonoxidischen Zusatz handeln. Diese oxidkeramischen Anteile können besonders bevorzugt nanoskalig ausgebildet sein. Die oxidkeramischen Anteile sind partikulär und können in einer besonders bevorzugten Ausführungsvariante einen mittleren Durchmesser von weniger als 100 nm, insbesondere von 5 bis 50 nm, aufweisen. Die Größe der partikulären Anteile können bei der Herstellung der Hohlfasern bei geringeren Temperaturen eingelagert werden. Größere Partikel oxidkeramischer Bestandteile würden höhere Brenntemperaturen bei der Verfestigung der carbid- oder nitridbasierten keramischen zweiten Schicht haben, was in Anwesenheit von Sauerstoff zu einer unerwünschten Umsetzung z.B. von SiC zu Glas führen kann und zu einem Verlust der Filtereigenschaft. Falls es daher beabsichtigt ist oxidkeramische Anteile der zweiten Schicht zuzusetzen, so empfiehlt es sich nanoskalige Partikel des oxidkeramischen Zuschlagstoffes zu verwenden. Nichtoxidische Keramiken für die zweite Schicht sind ausgesucht aus Nitrid und Carbidverbindungen, bevorzugt ausgesucht aus folgenden Stoffen: SiC, Si₃N₄, AlN und/oder BN. Ganz besonders bevorzugt ist Siliziumcarbid - SiC.

Die zweite Schicht 15 kann auf die erste Schicht 14 mittels eines nasschemischen Verfahrens aufgetragen und anschließend ausgehärtet werden.

Die zweite Schicht 14 dient als Trennschicht. Diese Trennschicht ist vorzugsweise die mediumsberührende Schicht innerhalb der Hohlfasern. Diese Trennschicht, beispielsweise aus SiC, kann z.B. bei der Abtrennung von natürlichen organischen Stoffen (NOM - Natural Organic Matter), z.B. einem Öl-Wasser-Gemisch, eingesetzt werden. Dabei ist eine erheblich geringere Foulingneigung und bessere Reinigungseigenschaften als Trennschichten auf Basis von oxidkeramischen Materialien zu beobachten. Eine mögliche Erklärung hierfür kann in den stark hydrophilen Eigenschaften von der nichtoxidkeramischen Schicht 15, z.B. von SiC, liegen, sowie aus in der Tatsache, dass z.B. bei SiC aufgrund der Lage des isoelektrischen Punktes (bei pH 2-3) über einen weiten pH-Bereich negativ geladen ist und dadurch die häufig ebenfalls negativ geladenen organischen Stoffe abgestoßen werden, was der Entstehung einer Foulingschicht entgegenwirkt und zugleich auch den Rückhaltgrad dieser Stoffe erhöht.

Durch den charakteristischen Verlauf des Oberflächenpotentials beispielsweise bei einer SiC-Trennschicht in Abhängigkeit vom pH Wert kann die Hohlfasermembran auch bei der Filtration in anderen Anwendungsbereichen, z.B. bei medizintechnischen Anwendungen wie beispielsweise in der Filtration von Blut zur Gewinnung von Blutplasma usw. angewandt werden.

Durch die Kombination einer Nichtoxidkeramik-basierenden ersten Schicht mit einer Oxidkeramik-basierenden zweiten Schicht als Fasermaterialwandung einer Hohlfaser werden die zuvor beschriebenen Vorteile hinsichtlich Membranperformance mit den Kostenvorteilen bei der Herstellung von oxidkeramischen Trägern verbunden.

Die erzielbare Leistungssteigerung lässt sich eindrucksvoll am Beispiel einer Öl/ Wasser-Trennung im Rahmen der Prozesswasser-Aufbereitung demonstrieren. Das im Test verwendete Prozesswasser weist eine Ölkonzentration ca. 6000 ppm auf. Unter gleichen Prozessparametern beträgt nach einer Filtrationsdauer von einem Tag der Diffusionsfluss der Membran mit der SiC-Trennschicht und einer Aluminiumoxidkeramik-Trägerschicht das Vierfache gegenüber einer vergleichbaren oxidkeramischen Aluminiumoxid-Hohlfasermembran mit Aluminiumoxid-Trennschicht. Nach drei Tagen ist der Diffusionsfluss immer noch doppelt so hoch wie der Diffusionsfluss der Hohlfaser mit der Aluminiumoxid-Trennschicht.

Darüber hinaus muss die Al₂O₃ Hohlfaser mit der oxidkeramischen Trennschicht im vorliegenden Fall zum Aufrechterhalten des Flusses alle 3 Stunden für mindestens 10 sec bei 3,5 bar rückgespült werden. Im Gegensatz dazu musste die SiC/Al2O3 Membran im betrachteten Zeitraum von 3 Tagen weder zurückgespült noch anderweitig gereinigt werden. Der Ölrückhalt liegt bei beiden Membranen > 99,5%.

Die erfindungsgemäße Hohlfasermembran kann in Form eines Filtermoduls insbesondere zur Aufarbeitung von Produced Water Treatment, Prozesswasser, Wasseraufbereitung allg., Oberflächenwasseraufbereitung, Trinkwasseraufbereitung, Abwasserbehandlung und Recycling, Filtrationsanwendungen in der Lebensmittel- und Getränkeindustrie sowie chemischen Industrie und der Bio- und Medizintechnik z.B. zur Blutfiltration verwendet werden.

Besonders bevorzugt kann ein Filtermodul mit den erfindungsgemäßen Hohlfasermembranen in Automobilanwendungen, insbesondere zur Wasser/Öl Trennung, eingesetzt werden.

Die vorbeschriebenen Hohlfasern können vorzugsweise eine hohe Temperaturbeständigkeit, insbesondere eine Temperaturbeständigkeit bis zu 500°C oder höher, aufweisen. Damit sind die Hohlfasern auch für Anwendungsbereiche wie Dampfsterilisationen und Heißgasfiltrationen geeignet.

Eine Einzelfaser weist insbesondere auch bei einer Schockbelastung von 10G und von 68 Mio. Lastwechsel eine hinreichende Funktionsfähigkeit auf.

Die Porosität der Faserwandung (2) bzw. der Filtermembran kann nach Wahl der Materialien eingestellt werden. In einer bevorzugten Ausführungsvariante kann die Porosität der ersten Schicht, also der Trägerschicht, 25-50% betragen und die Porosität der zweiten Schicht, also der Trennschicht, 20-60% betragen.

## Patentansprüche

1. Filtermembran zur Filterung von Flüssigkeiten, die feststoffbeladen sind oder eine oder mehrere nicht-mischbare Flüssigkeiten enthalten, mit einem mehrschichtigen Aufbau,
wobei
die Filtermembran als Hohlfaser ausgebildet ist,
wobei die Filtermembran zumindest eine erste Schicht (14) aufweist, welche als Hauptbestandteil ein oxidkeramisches Material aufweist und als Trägerschicht ausgebildet ist, wobei die Filtermembran (2) zumindest eine zweite Schicht (15) aufweist, welche als Hauptbestandteil ein nichtoxidkeramisches Material aufweist und als eine Trennschicht zur Filtration des Mediums (10) unter Ausbildung eines Retentats (12) und eines Permeats (11) ausgebildet ist, welche unmittelbar auf der ersten Schicht (14) angeordnet ist, wobei das oxidkeramische Material ausgesucht ist aus folgenden Stoffen: Aluminium(III)-oxid (Al₂O₃), Zirkonium(IV)-oxid (ZrO₂), Titan(IV)-oxid (TiO₂), Yttrium(III)-oxid (Y₂O₃) und/oder Siliziumdioxid (SiO₂), **dadurch gekennzeichnet, dass** dass das nichtoxidkeramische Material ein Nitrid- und/oder ein Carbid ist.

2. Filtermembran nach einem der vorhergehenden Ansprüche, dadurch gekennzeichzeichnet, dass die erste Schicht (14) einen oder mehrere Zuschlagstoffe, vorzugsweise SiO₂ oder nanoskalige oxidkeramische Partikel von bis zu 20 Gew.%, insbesondere zur Anpassung des Temperaturausdehnungskoeffizienten an die zweite Schicht oder zur Verbesserung der mechanischen Festigkeit der ersten Schicht aufweist.

3. Filtermembran nach einem der vorhergehenden Stoffen, **dadurch gekennzeichnet, dass** die zweite Schicht (15) einen oder mehrere weitere Zuschlagstoffe insbesondere zur Erhöhung der Materialfestigkeit, vorzugsweise bis zu 20 Gew.%, aufweist.

4. Filtermembran nach Anspruch 3, **dadurch gekennzeichnet, dass** der Zuschlagstoff ein oxidisches Keramikmaterial, insbesondere Zirkonium(IV)-oxid (ZrO₂) oder Böhmit, ist.

5. Filtermembran nach Anspruch 1, 2 oder 4, **dadurch gekennzeichnet, dass** der Zuschlagstoff oder die Zuschlagstoffe als nanoskalige Partikel ausgebildet sind, vorzugsweise mit einer Partikelgröße mit einem mittleren Durchmesser von kleiner als 100 nm, insbesondere mit einer Partikelgröße mit einem mittleren Durchmesser von 5-50 nm.

6. Filtermembran nach einem der vorhergehenden Ansprüche, **dadurch gekennzeichnet, dass** das nichtoxidkeramische Material ausgesucht ist aus folgenden Stoffen: Siliziumcarbid (SiC), Siliziumnitrid (Si₃N₄), Aluminiumnitrid (AlN) und/ oder kubisches Bornitrid (BN).

7. Filtermembran nach einem der vorhergehenden Ansprüche, **dadurch gekennzeichnet, dass** die zweite Schicht ein Verhältnis der Schichtdicke zur Porengröße kleiner als von 2500:1, vorzugsweise kleiner als 1000:1, insbesondere von 500:1 bis 50:1, aufweist.

8. Filtermembran nach einem der vorhergehenden Ansprüche, **dadurch gekennzeichnet, dass** das Verhältnis der Wandstärke der Filtermembran zur Wandstärke der zweiten Schicht größer ist als 3:1, vorzugsweise größer als 8:1, insbesondere größer als 10:1.

9. Filtermembran gemäß einem der vorhergehenden Ansprüche, **dadurch kennzeichnet, dass** die begrenzende innere und/oder äußere Faserwandung (2) der Hohlfaser durch die Filtermembran ausgebildet ist.

10. Filtermodul zur Filterung eines Mediums, umfassend eine Mehrzahl von Filtermembranen nach einem der vorhergehenden Ansprüche.

11. Verwendung von Filtermembranen gemäß einem der Ansprüche 1 bis 9 als Anordnung in Filtermodulen (4) zur Filterung von Prozesswasser, zur Trinkwasseraufbereitung, zur Oberflächenwasseraufbereitung, zur Abwasserbehandlung und Recycling, für Filtrationsanwendungen in der Lebensmittel- und Getränkeindustrie sowie der chemischen Industrie und der Bio- und Medizintechnik, insbesondere zur Blutfiltration, und in Automobilanwendungen, insbesondere zur Wasser/Öl-Trennung.

## Claims

1. Filter membrane for filtering liquids which are charged with solids or contain one ore more immiscible liquids, with a multilayer structure,
wherein the filter membrane is designed as hollow fiber,
wherein the filter membrane features at least a first layer (14) which features an oxide-ceramic material as main component and is designed as carrier layer,
wherein the filter membrane (2) features at least a second layer (15) which features as main component a non-oxide ceramic material and is designed as a separation layer for filtering the medium (10) by forming a retentate (12) and a permeate (11) which is directly disposed on the first layer (14), wherein the oxide-ceramic material is selected from the following substances: aluminum(III) oxide (Al₂O₃), zirconium(IV) oxide (ZrO₂), titanium(IV) oxide (TiO₂), yttrium(III) oxide (Y₂O₃) and/or silicon dioxide (SiO₂), **characterized in that** the non-oxide ceramic material is a nitrite and/or a carbide.

2. Filter membrane according to one of the above claims, **characterized in that** the first layer (14) features one ore more additives, preferably SiO₂ or nanoscale oxide-ceramic particles of up to 20 % by weight, in particular for adapting the temperature expansion coefficient to the second layer or for improving the mechanical strength of the first layer.

3. Filter membrane according to one of the above claims, **characterized in that** the second layer (15) features one or more further additives in particular for increasing the material strength, preferably of up to 20 % by weight.

4. Filter membrane according to claim 3, **characterized in that** the additive is an oxide ceramic material, in particular zirconium(IV) oxide (ZrO₂) or boehmite.

5. Filter membrane according to claim 1, 2 or 4, **characterized in that** the additive or the additives are designed as nanoscale particles, preferably of a particle size having an average diameter smaller than 100 nm, in particular of a particle size having an average diameter of 5-50 nm.

6. Filter membrane according to one of the above claims, **characterized in that** the non-oxide ceramic material is selected from the following substances: silicon carbide (SiC), silicon nitride Si₃N₄), aluminum nitride (AlN) and/or cubic boron nitride (BN).

7. Filter membrane according to one of the above claims, **characterized in that** the second layer features a ratio of the layer thickness relative to the pore size smaller than 2500:1, preferably smaller than 1000:1, in particular from 500:1 to 50:1.

8. Filter membrane according to one of the above claims, **characterized in that** the ratio of the wall thickness of the filter membrane relative to the wall thickness of the second layer is larger than 3:1, preferably larger than 8:1, in particular larger than10:1.

9. Filter membrane according to one of the above claims, **characterized in that** the limiting inner and/or outer fiber wall (2) of the hollow fiber is realized by the filter membrane.

10. Filter module for filtering a medium, comprising a plurality of filter membranes according to one of the above claims.

11. Use of filter membranes according to one of the claims 1 to 9, as arrangement in filter modules (4) for filtering process water, for drinking water treatment, for surface water treatment, for waste water treatment and recycling, for filtration applications in the food and beverage industry as well as in the chemical industry and in bioengineering and medical engineering, in particular for blood filtration, and in automotive applications, in particular for water/oil separation.

## Revendications

1. Membrane de filtration pour filtrer des liquides qui sont chargés de matières solides ou qui contiennent un ou plusieurs liquides immiscibles, avec une structure multicouche,
la membrane de filtration étant réalisée en tant que fibre creuse,
la membrane de filtration présentent au moins une première couche (14) qui, en tant qu'élément principal, présente un matériau en céramique oxydée et qui est réalisée en tant que couche de support,
la membrane de filtration (2) présentant au moins une deuxième couche (15) qui présente, en tant qu'élément principal, un matériau en céramique non oxydée et qui est réalisée en tant que couche de séparation pour filtrer le milieu (10) en formant un rétentat (12) et un perméat (11) qui est disposé directement sur la première couche (14), le matériau en céramique oxydée étant sélectionné parmi les substances suivantes : oxyde d'aluminium(III) (Al₂O₃), oxyde de zirconium(IV) (ZrO₂), oxyde de titane(IV) (TiO₂), oxyde d'yttrium(III) (Y₂O₃) et/ou dioxyde de silicium (SiO₂), **caractérisée en ce que** le matériau en céramique non oxydée est un nitrite et/ou un carbure.

2. Membrane de filtration selon l'une des revendications précédentes, **caractérisée en ce que** la première couche (14) présente un ou plusieurs additifs, de préférence SiO₂ ou des particules nanométriques en céramique oxydée jusqu'à 20 % en poids, notamment pour adapter le coefficient de dilatation thermique à la deuxième couche ou pour perfectionner la stabilité mécanique de la première couche.

3. Membrane de filtration selon l'une des substances précédentes, **caractérisée en ce que** la deuxième couche (15) présente un ou plusieurs additifs supplémentaires notamment pour augmenter la résistance des matériaux, de préférence jusqu'à 20 % en poids.

4. Membrane de filtration selon la revendication 3, **caractérisée en ce que** l'additif est un matériau céramique oxydique, notamment de l'oxyde de zirconium(IV) (ZrO₂) ou de la boehmite.

5. Membrane de filtration selon la revendication 1, 2 ou 4, **caractérisée en ce que** l'additif ou les additifs sont réalisés en tant que particules nanométriques, de préférence d'une taille des particules ayant un diamètre moyen plus petit que 100 nm, notamment d'une taille des particules ayant un diamètre moyen de 5-50 nm.

6. Membrane de filtration selon l'une des revendications précédentes, **caractérisée en ce que** le matériau en céramique non oxydée est sélectionné parmi les substances suivantes : carbure de silicium (SiC), nitrure de silicium (Si₃N₄), nitrure d'aluminium (AlN) et/ou nitrure de bore cubique (BN).

7. Membrane de filtration selon l'une des revendications précédentes, **caractérisée en ce que** la deuxième couche présente un rapport de l'épaisseur de la couche à la taille des pores plus petit que 2500:1, de préférence plus petit que 1000:1, notamment de 500:1 à 50:1.

8. Membrane de filtration selon l'une des revendications précédentes, **caractérisée en ce que** le rapport de l'épaisseur de la paroi de la membrane de filtration à l'épaisseur de la deuxième couche est plus grand que 3:1, de préférence plus grand que 8:1, notamment plus grand que 10:1.

9. Membrane de filtration selon l'une des revendications précédentes, **caractérisée en ce que** la paroi limitative de fibre (2) intérieure et/ou extérieure de la fibre creuse est réalisée par une membrane de filtration.

10. Module de filtration pour filtrer un milieu, comprenant une pluralité de membranes de filtration selon l'une des revendications précédentes.

11. Utilisation des membranes de filtration selon l'une des revendications 1 à 9, en tant qu'agencement dans des modules de filtration (4) pour filtrer de l'eau de traitement, pour le traitement de l'eau potable, pour le traitement de l'eau de surface, pour le traitement des eaux usées et leur recyclage, pour des applications de filtration dans l'industrie des denrées alimentaires et des boissons ainsi que dans l'industrie chimique et dans la bio-ingéniérie et la technologie médicale, notamment pour la filtration du sang, et dans des applications automobiles, notamment pour la séparation eau/huile.
